# EUROPEAN PATENT APPLICATION

(11) **EP 4 082 986 A1**
(43) Date of publication of application: **02.11.2022**
(21) Application number: 21171248.4
(22) Date of filing: 29.04.2021
(51) Int. Cl.: C04B 28/06, C09J 1/00

(54) **ONE COMPONENT CEMENTITIOUS COMPOSITION**

(71) Applicant: Henkel AG & Co. KGaA, 40589 Düsseldorf (DE)
(72) Inventor: Chaudhari, Mahesh, Abu Dhabi (AE); Neuhausen, Ulrich, 47807 Krefeld (DE); Thindiparambath, Vincy, Umm Al Quwain (AE); Nair, Sathishan, Umm Al Quwain (AE); Maier, Wolfgang, 40721 Hilden (DE); Kupinski, Marcin, 26-200 Konskie (PL); Tomaszewski, Stefan, 1060 Wien (AT)

(57) **Abstract**

The present invention is directed to a one-component aqueous composition comprising, based on the total weight of non-volatile constituents in the composition: from 15 to 30 wt.% of a) calcium aluminate cement; from 15 to 30 wt.% of b) at least one organic latex polymer; from 0.01 to 2 wt.% of c) diutan gum; and, from 30 to 60 wt.% of d) substantially inert filler. The aqueous cementitious composition is preferably free of hardener. The present invention also provides for the use of the one component composition as a coating for a basic substrate or as a structural adhesive, wherein at least one substrate to be adhered is basic, said basicity being determined by ASTM F710-11.

## Description

### FIELD OF THE INVENTION

The present disclosure is directed to a one component (1K) cementitious composition. More particularly, the present disclosure is directed to a one component cementitious composition comprising a calcium aluminate cement and a biopolymer, which composition has particular utility as tile adhesive but has broader utility as a structural adhesive, a water-proofing slurry or slurry-type seal coating for a substrate having basicity.

### BACKGROUND TO THE INVENTION

In recent years, the performance requirements for tile adhesives have become increasingly defined. Such requirements have been demarcated by the criteria of *inter alia* initial tensile strength, tensile strength under ageing and open time, which criteria enable adhesives to be differentiated into categories in a simple manner. In particular, European Standard EN12004:2-2017 applies such criteria to differentiate cementitious mortars (Class C) into those having normal setting requirements (Class C1) and those with more stringent requirements or further characteristics, such as Class C2 improved adhesives.

Tile adhesives having minimal or normal performance requirements are, of course, facile to formulate. However, tile adhesives required to meet the C2 classification are polymer-modified, which renders their formulation more complex. Typically, tile adhesives meeting the C2 classification are two-component (2K) compositions where for reasons of stability either the modifying polymer and the hydraulic binder are provided in separate components or a reactive modifying polymer and an initiator therefor are provided in separate components. The first and second components must be stored in separate vessels and are mixed only shortly before application: the composition then cures, typically without additional activation, with bond formation.

KR20060077430A (SSangkom Ltd.) describes a two-component (2K) adhesive for a ceramic tile, which adhesive comprises: a) filler comprising from 35 to 60 wt%. of white Portland cement, from 1 to 10 wt.% of silica having a particle size of from 100 to 200 mesh, from 35 to 60 wt.% of silica having a particle size of from 200 to 300 mesh, from 0.3 to 1.5 wt.% of methyl cellulose and from 1 to 5 wt.% of a cellulose fiber; b) a binder which comprises from 40 to 65 wt.% of an acrylic synthetic resin, from 0.05 to 0.2 wt.% of a preservative, from 2 to 6 wt.% of a thickener, from 0.05-0.2 wt.% of an antifoaming agent, from 1 to 6 wt.% of an anti-freezing agent, from 0.1 to 0.5 wt.% of a pH controller; and, c) from 30 to 50 wt.% of water as a diluting solvent.

DE10150600A (PCI Augsburg GmbH) describes a two-component (2K) hydraulically set adhesive mortar obtained from a powder component A and a liquid component B, wherein: component A contains an epoxide resin derived from bisphenol A or F, filler, and a cement containing binder; and, component B comprises an amine curing agent, water, plasticizer and an aqueous dispersion of vinyl or acrylate base polymer.

WO 2014/009298 (Sika Technology Ag) provides a kit-of-parts for preparing an adhesive and / or sealing formulation, said kit-of-parts comprising: a) a hydraulic binder module being a storage-stable, liquid composition comprising gypsum, Portland cement, aluminate cement or mixtures thereof; and, an anhydrous liquid which has a boiling point greater than 175°C at 1 atmosphere pressure and which is inert towards said hydraulic binder, wherein said anhydrous liquid is a plasticizer which remains an integral part of both the adhesive and / or sealing formulation and the final product obtained after application and drying of that formulation; and, b) an aqueous liquid module comprising water and a polymer dispersed therein, said dispersed polymer being selected from the group consisting of (meth)acrylics, vinyls, oil-modified polymers, polyesters, polyurethanes, polyamides, chlorinated polyolefins and mixtures or copolymers thereof.

WO2019210965A1 (Sika Technology Ag) also describes a two-component (2K) composition. The first component thereof comprises: between 68 and 99.9 wt.% of an aqueous dispersion of at least one polymer, said aqueous dispersion comprising said polymer in an amount between 20 and 90 wt.%; between 0 and 2 wt.% of a nonionic or ionic dispersing agent; and, between 0.1 and 15 wt.% of a monovalent metal salt. The second component of the composition comprises: between 10 and 30 wt.% of a nonionic, non-aqueous liquid carrier; between 0 and 20 wt.% of calcium sulfate; between 10 and 89.9 wt.% of at least one hydraulic binder; between 0 and 10 wt.% of a thixotropy agent; and, between 0.1 and 25 wt.% of a polyamine. The first and second components are prepared and stored separately and mixed directly before application.

Analogously to C2 adhesive compositions, water-proofing slurries and slurry-type sealing coating compositions are conventionally based on mineral binders, fillers and latex polymers: the application and drying of such slurries is intended to form a water-proofing membrane on the substrate concerned. The slurries are, equally, subject to performance requirements as set out in industry standards such as EN 14891: 2017, ETAG 022 (6:2005) and EN 1504-2 (7:2004): it is, for instance, important that such water-proofing slurries and slurry-type sealing coating compositions exhibit limited shrinkage upon drying and that the membranes formed there from exhibit limited wet expansion.

Slurries of this kind have also typically been formulated as two-component (2K) compositions. For illustration, WO2016/142339A1 (BASF SE) describes a two-component (2K) sealing slurry system composition comprising: i) a first dry component comprising: 5 - 20 wt.% lime stone powder; 40 - 77 wt. % silica sand; 1 - 50 wt.% hydraulic binder component; and, 0 - 10 wt.% additives selected from one or more of anti-foaming agents, thickeners, activator, cross-linking agent, pigment and fibers; and, ii) a second wet-component comprising: 30 - 70 weight % polymer; 0 - 10 wt. % additives selected from one or more of anti-foaming agents, thickeners, activator, cross-linking agent, pigments; and, water up to 100 wt. %.

The use of such two-component (2K) cementitious compositions is associated with certain drawbacks. Each component must be separately packaged with concomitant waste generation. On account of the high viscosity of that component containing the hydraulic binder - and oftentimes also of that component containing the polymeric binder - it is often difficult to mix the two components homogeneously: this presents a burden on manpower and equipment at the worksite. Further, the application of the mixed composition, especially in the form of thin films, is often hindered or difficult to achieve. As regards specific modifying polymers, it is observed that epoxy systems are expensive and cannot be employed on damp surfaces. Moreover, acrylic polymer systems can demonstrate deficient tensile strengths under water immersion and freeze-thaw conditions.

There is considered to exist a need in the art to develop storage stable, one component (1K) cementitious compositions which can have utility as tile adhesives and which can satisfy the classification criteria for improved adhesives (C2). It would be particularly desirable to develop one component (1K) cementitious compositions that will exhibit both an extended open time (E) and reduced slip (T) sufficient to meet the C2TE classification criteria established in European Standard EN12004:2-2017. A parallel need is considered to exist in the art to develop storage stable, one component (1K) cementitious compositions which can have utility as water-proofing slurries and slurry-type sealing coating compositions. A concominant need also arises to develop appropriate methods of applying such one component (1K) compositions.

### STATEMENT OF THE INVENTION

In accordance with a first aspect of the present invention, there is provided a one-component aqueous composition comprising, based on the total weight of non-volatile constituents in the composition:
from 15 to 30 wt.%, preferably from 15 to 25 wt.% of a) calcium aluminate cement;
from 15 to 30 wt.%, preferably from of 15 to 25 wt.% of b) at least one organic latex polymer;
from 0.01 to 2 wt.%, preferably from 0.1 to 1 wt.% of c) diutan gum; and,
from 30 to 60 wt.%, preferably from 30 to 60 wt.% of d) substantially inert filler.

In accordance with an important embodiment, the one-component aqueous composition is substantially free of hardener.

The organic latex polymer (b)) preferably comprises or consists of at least one styrene-acrylic ester copolymer. For example, the or each styrene-acrylic ester copolymer included in the composition may comprise styrene and at least one further monomer represented by Formula (I):

H₂C=CGCO₂R¹ (I)

wherein: G is hydrogen, halogen or a C₁ alkyl group; and,
R¹ is selected from: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; C₂-C₁₂ alkynyl; C₆-C₁₈ aryl; C₁-C₉ heteroaryl; C₇-C₁₈ alkaryl; and, C₇-C₁₈ aralkyl.

A preference may be noted for styrene-acrylic ester copolymers according to Formula (I) in which R¹ is selected from: C₁-C₁₂ alkyl; C₁-C₆ hydroxyalkyl; C₃-C₁₂ cycloalkyl; and, C₆-C₁₈ aryl.

The substantially inert filler d) of the composition is preferably characterized by at least one of the following properties: i) a Moh hardness of greater than 1; ii) a particle size of 30 mesh and smaller as determined in accordance with *ISO 3310-1:20;* and, iii) a BET surface area of from 1 to 30 m²/g, preferably from 1 to 20 m²/g.

In an embodiment, part d) of the composition is characterized by comprising or consisting of first and second particulate silica materials, which first and second materials are distinguished by their particle size. In particular, the composition may comprise, based on the total weight of non-volatile constituents in the composition:
from 10 to 20 wt.% of di) a first silica having a particle size of 75 mesh of smaller; and,
from 20 to 40 wt.% of dii) a second silica having a particle size of from 30 to 70 mesh,
wherein said particle sizes are determined in accordance with *ISO 3310-1:2016.*

A superplasticizer is an optional but preferred part of the composition. Desirably, the composition comprises superplasticizer in an amount up to 1 wt.%, based on the total weight of non-volatile constituents in the composition, wherein said superplasticizer is selected from the group consisting of: polycarboxylates; melamine sulfonates; and, polynaphthalene sulfonates.

In accordance with a second aspect of the present invention, there is provided the use of the composition as defined herein above and in the appended claims as a structural adhesive, wherein at least one substrate to be adhered is basic, said basicity being determined by ASTM F710-11. The basicity of the substrate serves to initiate the hardening of the composition applied thereto and this negates the necessity for a hardener to be present in the composition. The substrate may possess intrinsic basicity and may preferably be selected from the group consisting of: fresh asbestos; concrete; cementitious substrates; calcareous substrates; and, inorganic mortar.

The present invention also provides for the use of the composition as defined herein above and in the appended claims as a tile adhesive. As documented in the appended examples, the aqueous cementitious composition according to the present disclosure meets the C2TE classification criteria for tile adhesives established in European Standard EN12004:2-2017.

The utility of the present composition is not limited to being an adhesive composition. The disclosure further contemplates the use of the aqueous cementitious composition as a slurry or slurry-type coating composition, which composition, upon hardening, forms a non-continuous or continuous coating on a basic substrate, said basicity being determined by ASTM F710-11. When applied as a continuous coating, the hardened cementitious composition may provide a sealant function and / or may impart water impermeability on the substrate to which it is applied. The slurry or slurry-type coating may further protect the substrate from other environmental influences.

### DEFINITIONS

As used herein, the singular forms "a", *"an"* and *"the"* include plural referents unless the context clearly dictates otherwise.

The terms *"comprising", "comprises"* and *"comprised o*f" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified. For completeness, the term *"comprising"* encompasses *"consisting of".*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0"* specifically includes 0 wt.%: the ingredient defined by said range may or may not be present in the composition.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense -that is meaning to have the potential to - rather than in the mandatory sense.

As used herein, room temperature is 23°C plus or minus 2°C. As used herein, *"ambient conditions"* means the temperature and pressure of the surroundings in which the composition is located or in which an adhesive or coating obtained from said composition is located.

Unless otherwise stated, the term *"particle size"* refers to the largest axis of the particle. In the case of a generally spherical particle, the largest axis is the diameter.

The term *"mean particle size" (D50),* as used herein, refers to a particle size corresponding to 50% of the volume of the sampled particles being greater than and 50% of the volume of the sampled particles being smaller than the recited D50 value. Similarly, if used, the term "D90" refers to a particle size corresponding to 90% of the volume of the sampled particles being smaller than and 10% of the volume of the sampled particles being greater than the recited D90 value.

As used herein, *"BET surface area"* refers to the surface area of a filler material as measured by the BET (Brunauer, Emmet and Teller) nitrogen absorption method in accordance with ASTM D-6556.

Viscosities of the compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

As used herein and with regard to the use of the composition as an adhesive, the term *"open time"* refers to the length of time after the composition is applied to a substrate in which a bond may be formed.

As used herein, the term *"water"* is intended to encompass tap water, spring water, purified water, deionized water, de-mineralized and distilled water. Water is included in the compositions of the present invention in its liquid form. The presence of solid water particles - ice - is not desirable as solid water cannot be mobilized for the formation of the hydrates required for the development of strength in cured composition.

The aforementioned composition has been defined by *"wt.% based on the total weight of all the non-volatile constituents in the composition".* For completeness, a volatile constituent is a constituent which has an initial boiling point of less than or equal to 250°C as measured at a standard atmospheric pressure of 101.3 kPa. A non-volatile constituent is therefore a constituent which has an initial boiling point of more than 250°C as measured at a standard atmospheric pressure of 101.3 kPa.

As used herein *"basicity"* means the quality of being a base, not an acid. More particularly, in accordance with the Lewis theory of acids and bases, a base is an electron-pair donor. This definition encompasses but is not limited to Brønsted-Lowry bases, which compounds act as proton acceptors.

As used herein, *"tile"* refers to any generally planar floor, ceiling or wall covering. Said tile will commonly have a polygonal shape which is based on regular quadrilateral, pentagonal or hexagonal geometric forms but it is not precluded that the tile may have a non-polygonal regular geometric form or an irregular geometric shape. Without intention to limit the present disclosure, it will be conventional for tiles to have thickness of from 0.1 to 50 mm, preferably from 0.1 to 20 mm.

As used herein, and in accordance with ASTM C618-12, a *"pozzolan"* is a material that contains silica and alumina and which, in itself, possesses little or no cementitious value. However, in finely divided form the pozzolan increases the strength of cement by forming calcium silicate and calcium aluminate hydrate from the reaction at room temperature of said pozzolan, calcium hydroxide in the cement and water. For completeness, the phrase *"cementitious properties"* references the ability to bind materials together and set.

The expression *"substantially inert"* in relation to the filler means that the filler possesses substantially no pozzolanic activity. The expression is intended to encompass fillers which are chemically inactive and have no ability to react.

As used herein, *"concrete"* means any type of building material containing aggregates such as stone, gravel, brushed rock or sand which are embedded in a matrix - cement or binder - that fills the space between the aggregate particles and binds them together. Exemplary matrices include Portland Cement, mineral mortar, asphalt and polymer resins. The *"concrete"* may further include organic or silica-based fibers or metallic wires, cables or rods as reinforcing materials.

For completeness, the term *"water factor"* is used herein to denote the weight of water used in an aqueous cementitious composition divided by the total weight of used non-volatile components (w/w).

As used herein, the term *"metallic"* encompasses elemental or pure metals, metal alloys and metal composites.

As used herein, *"curing"* refers to the reactions through which a given composition hardens from a fluid mixture into a solid. Curing may occur herein by exposure to ambient conditions or by deliberate exposure to heat or radiation.

As used herein, *"hardener"* refers to an element, compound or complex that initiates hardening of a given composition from a fluid mixture into a solid.

The term *"latex polymer",* as used herein, refers to a polymer which forms a dispersion or emulsion of polymer particles in the presence of water and one or more secondary dispersing or emulsifying agents, the presence of which is required to form the dispersion or emulsion. The secondary dispersing or emulsifying agent is typically separate from the polymer after polymer formation but it is not precluded that a reactive dispersing or emulsifying agent may become part of the polymer particles as they are formed.

As used herein, *"(meth)acryl"* is a shorthand term referring to "*acryl*" and/or "*methacryl*"*.* Thus the term *"(meth)acrylate"* refers collectively to acrylate and methacrylate.

As used herein, *"C₁-Cₙ alkyl"* group refers to a monovalent group that contains 1 to n carbons atoms, that is a radical of an alkane and includes straight-chain and branched organic groups. As such, a *"C₁-C₁₈ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₁₈ hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁-C₁₈ alkoxyalkyl"* as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂-C₄ alkylene"* as used herein, is defined as saturated, divalent hydrocarbon radical having from 2 to 4 carbon atoms.

The term "*C₃*-*C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, *"C₂-C₂₄ alkenyl"* refers to hydrocarbyl groups having from 2 to 24 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "Z" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃;-CH₂CH=CH₂; -C(=CH₂)(CH₃); -CH=CHCH₂CH₃; -CH₂CH=CHCH₃; -CH₂CH₂CH=CH₂;-CH=C(CH₃)₂; -CH₂C(=CH₂)(CH₃); -C(=CH₂)CH₂CH₃; -C(CH₃)=CHCH₃; -C(CH₃)CH=CH₂;-CH=CHCH₂CH₂CH₃; -CH₂CH=CHCH₂CH_{3;} -CH₂CH₂CH=CHCH₃; -CH₂CH₂CH₂CH=CH₂;-C(=CH₂)CH₂CH₂CH₃; -C(CH₃)=CHCH₂CH₃; -CH(CH₃)CH=CHCH; -CH(CH₃)CH₂CH=CH₂;-CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"alkylaryl"* refers to alkyl-substituted aryl groups, both radicals as defined hereinabove. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the composition or an adhesive or coating obtained therefrom. An exemplary trace amount is less than 1000 ppm by weight of the composition. The term *"substantially free"* encompasses those embodiments where the specified compound, element, ion, or other like component is completely absent from the composition or is not present in any amount measurable by techniques generally used in the art.

### DETAILED DESCRIPTION OF THE INVENTION

### a) Calcium Aluminate Cement

As noted above, the composition of the present invention comprises a) calcium aluminate cement. It is preferred that the composition comprises, based on the total weight of non-volatile constituents in the composition, from 15 to 30 wt.%, preferably from 15 to 25 wt.% of said calcium aluminate cement.

As used herein, the term *"calcium aluminate cement"* refers to cements in accordance with Standard EN 14647 *Calcium Aluminate Cement: Composition, specifications and conformity criteria.* Such cements may be produced by smelting or sintering as is known in the art and within this Standard can be categorized into the groups: rich in iron; and, low in iron. So-called iron-free calcium aluminate cements are not included in the definition of EN 14647.

Typical calcium aluminate cements that are rich in iron are produced by means of the smelting process, have a grey to black-grey color and can be characterized by their chemical composition by weight as follows: 36-42% Al₂O₃; 2-6% SiO₂; 14-19% Fe₂O₃; 37-40% CaO; less than 1.5% MgO; and less than 0.4% SO₃. Calcium aluminate cements that are low in iron are colored beige to grey and typically contain by weight: 50-55% Al₂O₃, 2-6% SiO₂, 1-3% Fe₂O₃, 37-40% CaO and less than 1.5% MgO as well as less than 0.4% SO₃. It is therefore evident that the color of calcium aluminate cements becomes darker the higher their iron content.

When manufacturing calcium aluminate cements, the following mineral phases form, depending on the selected ratio of aluminium oxide (A) to calcium oxide (C): i) in calcium aluminate cement with a high iron content: monocalcium aluminate (CA), brown millerite (C₄AF), belite (C₂S), gehlenite (C₂AS), mayenite (C₁₂A₇) and perovskite (CT); and, ii) in calcium aluminate cement types with a low iron content, CA, C₂AS, CT and C₁₂A₇.

The monocalcium aluminate phase (CA) is mainly responsible for desirable hydraulic properties of the calcium aluminate cements, in particular their early strength development as compared to calcium silicate type cements. It is considered that the phases CA and, if included, C₁₂A₇, are the only phases in calcium aluminate cements that react quickly with water. However, whilst it may be stated that the reactivity of calcium aluminates with water increases with an increase in the C/A molar ratio term, an excessively high C₁₂A₇ content can promote the premature setting of the calcium aluminate cement on account of its high hydraulic reactivity.

Without intention to limit the present invention, exemplary commercially available calcium aluminate cements include: Istra^{™} 40 and Istra^{™} 50 available from Calucem; Ciment Fondu and Secar^{™} 51 available from Kerneos; Electroland available from Cementos Molins; and, Gorkal^{™} 40 and Gorkal^{™} 50 available from Gorka.

In an embodiment of the invention, the calcium aluminium cement may be provided in the form of a stabilized aqueous suspension, by which is meant a suspension which at ambient temperature remains liquid for at least one month. In order to prevent the premature hardening of the hydraulic binder, the suspension includes at least one setting inhibitor - sometimes referred to as a blocking agent - which serves to passivate the hydraulic binder. In this embodiment, the composition may comprise, based on the total weight of non-volatile constituents in the composition, from 0.1 to 5 wt.%, for example from 0.1 to 2.5 wt.% of said at least one setting inhibitor.

Without intention to limit the present invention, suitable setting inhibitors which may be used alone or in combination, include: boron compounds, such as borax or boric acid; oxy acids of phosphorus, such as ortho-phosphoric acid, meta-phosphoric acid and phosphonic acid and derivatives of said oxy acids; and, organophosphates. For completeness, the aforementioned derivatives include those which form from the oxy acids of phosphorous in the aqueous phase, of which mention may be made of: phosphorus pentoxide; phosphorus trioxide; pyrophosphoric acid; and, tripolyphosphoric acid. Further suitable phosphonic acid derivatives include: aminotrimethylenephosphonic acid; aminoethylphosphonic acid; 1-hydroxyethylidene-1,1-diphosphonic acid; tetramethylenediamine-tetramethylenephosphonic acid; hexaamethylenediamine-tetramethylenephosphonic acid; diethylenetriaminepentamethylenephosphonic acid; phosphonobutane tricarboxylic acid; N-(phosphonomethyl)iminodiacetic acid; 2-carboxyethylphosphonic acid; and, 2-hydroxyphosphonocarboxylic acid. It is noted that the preferred inhibitors are boric acid and ortho-phosphoric acid.

Stabilized aqueous suspensions of calcium aluminate cement are commercially available, for example under the trade name Exalt^{®} of Kerneos, France. In the alternative, such suspensions may conventionally be prepared by forming an aqueous solution of the setting inhibitor(s) into which the calcium aluminate cement is then introduced, expediently under stirring.

### b) Latex Polymer

The present composition comprises from 15 to 30 wt.%, based on the total weight of non-volatile constituents in the composition, of b) at least one organic latex polymer. The composition may, in particular, comprise from 15 to 25 wt.%, based on the total weight of non-volatile constituents in the composition, of said at least one organic latex polymer.

The inclusion of latex-forming organic homo- and / or co-polymers moderates the physical properties of the composition and any adhesive or coating obtained there from. Non-limiting examples of suitable (co-)polymers include: vinyl acetate homopolymers; copolymers of vinyl acetate with at least one further vinyl ester; copolymers of vinyl acetate with ethylene; copolymers of vinyl acetate, ethylene and at least one further vinyl ester; copolymers of vinyl acetate, ethylene and at least one (meth) acrylic ester; copolymers of vinyl acetate with (meth)acrylates and other vinyl esters; copolymers of vinyl acetate, ethylene and vinyl chloride; copolymers of vinyl acetate, ethylene and styrene; copolymers of vinyl acetate with acrylates; styrene-acrylic ester copolymers; styrene-1,3-butadiene copolymers; and, vinyl chloride-ethylene copolymers.

Preference is given to: styrene-acrylic ester copolymers; vinyl acetate homopolymers; copolymers of vinyl acetate with ethylene; copolymers of vinyl acetate, ethylene and styrene; copolymers of vinyl acetate, ethylene and at least one co-monomer selected from the group consisting of vinyl esters having from 1 to 15 carbon atoms in the carboxylic acid radical, such as vinyl propionate, vinyl laurate and vinyl versatate; copolymers of vinyl acetate, ethylene and at least one co-monomer selected from (meth) acrylic esters of unbranched or branched alcohols having from 1 to 15 carbon atoms, such as N-butyl acrylate and 2-ethylhexyl acrylate; copolymers of vinyl acetate, vinyl esters having from 1 to 15 carbon atoms in the carboxylic acid radical and (meth) acrylic esters of unbranched or branched alcohols having from 1 to 15 carbon atoms; and, copolymers of vinyl acetate, ethylene and vinyl chloride.

In a particular embodiment of the invention, part b) comprises or consists of at least one styrene-acrylic ester copolymer. The or each styrene-acrylic ester copolymer included in the composition comprises styrene and at least one further monomer represented by Formula I:

H₂C=CGCO₂R¹ (I)

wherein: G is hydrogen, halogen or a C₁ alkyl group; and,
R¹ is selected from: C₁-C₃₀ alkyl; C₁-C₁₈ hydroxyalkyl; C₂-C₃₀ heteroalkyl; C₃-C₃₀ cycloalkyl; C2-C8 heterocycloalkyl; C₂-C₂₀ alkenyl; C₂-C₁₂ alkynyl; C₆-C₁₈ aryl; C₁-C₉ heteroaryl; C₇-C₁₈ alkaryl; and, C₇-C₁₈ aralkyl.

For example, R¹ may be selected from: C₁-C₁₈ alkyl; C₁-C₁₂ hydroxyalkyl; C₂-C₁₈ heteroalkyl, C₃-C₁₈ cycloalkyl; C₂-C₈ heterocycloalkyl; C₂-C₈ alkenyl; C₂-C₈ alkynyl; C₆-C₁₈ aryl; C₁-C₉ heteroaryl; C₇-C₁₈ alkaryl; and, C₇-C₁₈ aralkyl. Desirably, said at least one further monomers are characterized in that R¹ is selected from: C₁-C₁₂ alkyl; C₁-C₆ hydroxyalkyl; C₃-C₁₂ cycloalkyl; and, C₆-C₁₈ aryl.

Examples of (meth)acrylate monomers in accordance with Formula (I) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclopropyl (meth)acrylate; cyclobutyl (meth)acrylate; cyclopentyl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; perfluorooctyl (meth)acrylate; benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

It is noted that the presence - in the styrene-acrylic ester copolymer(s) - of additional ethylenically unsaturated non-ionic monomers not conforming to Formula (I) is not precluded. Without intention to limit the present invention, such further ethylenically unsaturated non-ionic monomers may include in particular: 1,3-dienes, such as 1,3-butadiene and isoprene; and, α,β-monoethylenically unsaturated monocarboxylic acids; and, α,β-monoethylenically unsaturated dicarboxylic acids. For completeness, whilst copolymerizable acid monomers should typically be used in the form of free acid, it is not precluded that the constituent acid groups of the monomers be partially or completely neutralized with suitable bases, provided this does not compromise their participation in co-polymerization.

The aforementioned latex polymers may be prepared by conventional means accessible to the skilled artisan, such as by emulsion polymerization. In the alternative, such polymers may be provided from commercial sources. By way of example, reference may be made to: FX7000 styrene acrylate copolymer, available from Elotex; Avandisp^{™} EA 109 styrene acrylate copolymer available from Avance Chem; Revacryl R248 surfactant stabilized styrene acrylate copolymer, available from Synthomer; HD 1500 vinyl acetate / vinyl versatate copolymer, available from Elotex; and, and FX2322 vinyl acetate / ethylene copolymer available from Elotex.

### c) Diutan Gum

The present composition comprises, based on the total weight of non-volatile constituents in the composition, from 0.01 to 2 wt.% of c) diutan gum. The composition may, for example, comprise from 0.1 to 1 wt.% or from 0.2 to 0.8 wt.% of said diutan gum, based on the total weight of non-volatile constituents in the composition. In a particular embodiment, the composition comprises from 0.3 to 0.6 wt.% of said diutan gum, based on the total weight of non-volatile constituents in the composition.

Diutan gum (*heteropolysaccharide S-657*) is composed of a hexameric repeat unit consisting of four sugars in the backbone - D-glucose, D-glucuronic acid, D-glucose and L-rhamnose - and a side chain of two L-rhamnose residues attached to one of the glucose residues: two acetyl substituents per hexameric repeat unit are also present.

Diutan gum is prepared by the fermentation of strain *Sphingomonas* sp. ATCC 53159 and instructive references in this regard include: US Patent No. 5,175,278 and US Patent No. 8,921,077 B2. The gum may be provided for inclusion into the composition as either a powder or as an aqueous solution and, for completeness, commercial sources of diutan gum include: KELCO-CRETE^{™} DG-F, GEOVIS^{™} XT, KELCO-CRETE^{™} 80, KELCO-CRETE^{™} 200 and KOC617, all available from CP Kelco ApS.

### d) Substantially Inert Filler

The present composition comprises from 30 to 60 wt.%, based on the total weight of non-volatile constituents in the composition, of d) substantially inert filler. The composition may, in particular, comprise from 40 to 60 wt.%, based on the total weight of non-volatile constituents in the composition, of said substantially inert filler.

Without intention to limit the present invention, the inert filler may comprise or consist of at least one particulate material selected from: natural calcium carbonate, such as chalk, calcite and marble; precipitated (synthetic) calcium carbonate (PCC); barium carbonate; dolomite; talc; crystalline silica; titanium dioxide including fumed titanium dioxide; iron oxides; manganese oxides; kaolin; clays; mica; slag; calcium sulfate; basalt; barium sulfate; aluminium hydroxide; and, bauxite.

A preference for particulate materials having a Moh hardness of greater than 1 might be noted. Independently of or additional to this hardness condition, the or each particulate material included as inert filler in the composition should have a surface which is untreated. As regards particulate silica filler(s), treated or hydrophobic silica is thus not preferred.

Broadly, the inert filler should be characterized by a particle size of 30 mesh and smaller and preferably a particle size in the range from 100 mesh to 500 mesh, as determined in accordance with *ISO 3310-1:2016Test sieves* - *Technical requirements and testing* - *Part 1: Test sieves of metal wire cloth.* Independently of or additional to this particle size requirement, the inert filler should be characterized by a BET surface area of from 1 to 30 m²/g, preferably from 1 to 20 m²/g.

As will be recognized in the art, particles having these physical properties may be formed by micronizing, which term is intended to encompass both: particles which have been produced through finely dividing materials which are originally presented in bulk form; and, particles obtained by other mechanical, chemical or physical methods, including formation in solution with or without a seeding and comminution by one or more of pulverization, milling, grinding, homogenization and sonication.

In an important embodiment of the present invention, part d) of the composition is characterized by comprising or consisting of first and second particulate silica materials, which materials are distinguished by their particle size. More particularly, the composition comprises, based on the total weight of non-volatile constituents in the composition:
from 10 to 20 wt.% of di) a first silica having a particle size of 75 mesh of smaller; and,
from 20 to 40 wt.% of dii) a second silica having a particle size of from 30 to 70 mesh,
wherein said particle sizes are determined in accordance with *ISO 3310-1:2016Test sieves* - *Technical requirements and testing* - *Part 1: Test sieves of metal wire cloth.*

### Adjuvants

The term *"adjuvant"* as used herein denotes a substance within the meaning of standard EN 206.1, and specifically the definition in paragraph 3.1.22 thereof: a product added to the composition in small amounts relative to the mass of composition in order to modify the properties of the fresh or cured composition. Such adjuvants can be used in such combination and proportions as desired, provided they do not adversely affect the nature and essential properties of the composition. While exceptions may exist in some cases, the composition should not comprise *in toto* more than 20 wt.%, based on the total weight of non-volatile constituents in the composition, of adjuvants and preferably should not comprise more than 10 wt.%, of said adjuvants.

The composition may comprise at least one adjuvant chosen from: plasticizers; superplasticizers; setting retarders; setting accelerators, such as nitrate, thiocyanate and chloride salts; curing accelerators, such as alkali metal carbonates; air entrainers; anti-shrinkage agents; anti-bubbling or antifoam agents; leak-proofing agents such as calcium stearate; natural pozzolanic compounds, such as natural zeolites, pumice, trass, santorin earth, kieselguhr, homstone and chert; synthetic pozzolanic compounds, such as fired, ground clay (ground brick), synthetic zeolites, fly ashes, silica dust, silica fume, oil shale ash and metakaolin; anti-sedimentation agents, such as bentonites and attapulgites; mineral or organic pigments; rheology modifiers; water retainers, such as starch ethers, cellulose ethers and modified cellulose ethers; and, biocides.

A *"plasticizer"* for the purposes of this invention is a substance that decreases the viscosity of the composition and thus facilitates its processability. Herein the plasticizer may constitute up to 1 wt.% or up to 0.5 wt.%, based on the total weight of non-volatile constituents in the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

As is known in the art, a *"superplasticizer"* denotes a de-flocculant organic compound, which acts by electrostatic repulsion and / or by steric bulk. Herein the superplasticizer may constitute up to 1 wt.% or up to 0.5 wt.%, based on the total weight of non-volatile constituents in the composition, and is preferably selected from the group consisting of: polycarboxylates; melamine sulfonates; and, polynaphthalene sulfonates.

If necessary, one or more air entraining agents may be added to the composition for the purpose of capturing an amount of air and rendering the obtained cured composition more durable to *inter alia* freeze-thaw conditions. Suitable air entraining agents include: anionic surfactants, such as anionic surfactants of the carboxylic acid, sulfuric acid ester, sulfonic acid and phosphoric acid ester types of which sodium lauryl sulfates may be mentioned as a particular example; cationic surfactants, such as cationic surfactants of the primary amine salt, secondary amine salt, tertiary amine salt and quaternary amine salt types; nonionic surfactants, such as those of the ester, ester-ether, ether and alkanolamide types; and, ampholytic surfactants, such as sulfo-betaines. A preference for the use of anionic surfactant based air entraining agents is noted.

To mitigate for the excessive entrainment of air in cementitious compositions and / or to provide predictable air contents therein, defoamers may be included in the compositions. Exemplary commercial defoamers include: BYK037 available from BYK-Chemie GmbH; and, Tego Foamex 1488 available from Evonik Industries.

The term *"rheology modifier"* denotes an organic compound having utility in increasing one or more of the viscosity, the cohesion and the shear threshold of the composition. Rheology modifiers may further have an anti-bleeding effect. As exemplary rheology modifiers having utility in the present invention, mention may be made of modified or unmodified polysaccharides other than diutan gum and including in particular: xanthan gums, such as KELZAN^{™}, KELZAN^{™} AR, KELZAN^{™} ASX, KELZAN^{™} ASX T, KELZAN^{™} CC, KELZAN^{™} HP, KELZAN^{™} RD, KELZAN^{™} S, KELZAN^{™} ST, KELZAN^{™} T, KELTROL^{™}, KELTROL^{™} T and KELTROL^{™} TF (all from CP Kelco ApS) and VANZAN^{™} and VANZAN^{™} D (both available from R.T. Vanderbilt Co.); gellan gums, such as KELCOGEL^{™}, KELCOGEL^{™} F and KELCOGEL^{™} LT 100 (all from CP Kelco ApS); carrageenan gums, such as GENUVISCO^{™} X-906-02 (from CP Kelco); and, welan gums, such as K1A96 (manufactured by Sansho Co., Ltd.) and K1A112 and K7C2433 (manufactured by Sansho Co., Ltd.). Where such modified or unmodified polysaccharide(s) is employed as a rheological modifier in the composition, it should not be deleterious to the action of the diutan gum and should thus be added in an amount of from 0 to 20 wt.%, based on the weight of said diutan gum c).

In certain situations it may be beneficial for the composition to include biocide. When the composition is both prepared and utilized in a short amount of time, such biocide need not be necessary. Conversely added biocide can prevent the growth of microbial organisms where the composition is intended to be stored for some time prior to use. Thereby the shelf-life of the composition may be determinative of the amount of biocide added to inhibit or prevent microbial growth but illustrative added amounts of biocide are from 0.01 to 2 wt.% or from 0.01 to 1 wt.%, based on the total weight of non-volatile constituents in the composition.

Without intention to limit the present invention, exemplary biocidal compounds which may be used alone or in combination include: pyrithione (*2-mercaptopyridine-N-oxide*) salts, in particular sodium pyrithione (CAS Registry No. 3811-73-2) and zinc pyrithione (ZPT); isothiazolinone compounds, such as 5-chloro-2-methyl-4-isothiazolin-3-one, 2-methyl-4-isothiazolin-3-one, 4,5-dichloro-2-methylisothiazolin-3-one, 2-n-octylisothiazolin-3-one, 1,2-benzisothiazolin-3-one, 4,5-trimethylene-4-isothiazolin-3-one and 2-methyl-4,5-trimethylene-4-isothiazolin-3-one; diidomethyl-4-tolylsulfone; thiabendazole; tebuconazole; 3-iodo-2-propynyl butylcarbamate; and, ortho-phenyl phenol (OPP).

### METHODS AND APPLICATIONS

In use, the above described raw materials of the composition are admixed in the presence of water. As noted, the water may be independently added to the raw materials or one or more the raw materials - and in particular the calcium aluminium cement - may be pre-dispersed in water prior to admixture to the remaining parts of the composition. Without intention to limit the present invention, admixing will conventionally entail mixing the solid materials in water in stages or gradually in an appropriate mixer: water may added during the admixing process, if applicable, while running the mixer. High intensity mixing - in which a mixing energy of at least 0.5 kW per 100 kg of ingredients is used - is preferred to ensure that a homogeneous mixture is obtained. The use of a flat-bladed mixer may also be of benefit.

The method by which the aqueous cementitious composition is to be applied is one determinant of the total amount of water added and the time at which any water is admixed with the dry ingredients relative to the application of the coating composition. However, a further determining consideration is that the addition of too much water may result in particulate materials falling out of suspension, which materials can be difficult to re-suspend. With due regard to such considerations, a water factor of from 0.05 to 1, for example a water factor of from 0.1 to 0.5, may be mentioned as being suitable in mixing the present composition. Independently of or additional to the water factor, it is preferred that the coating composition be characterized by a viscosity at application of less than 100000 centipoise, for example from 10000 to 100000 centipoise.

In a preferred embodiment the water content of the aqueous cementitious compositions is 5 to 40 wt.-%, more preferably 10 to 30 wt.-%, most preferable 15 to 25 wt-%, based on the total weight of the aqueous cementitious compositions.

Prior to applying the aqueous compositions to a substrate, it is often advisable to pre-treat the relevant surfaces to remove foreign matter therefrom: this step can, if applicable, facilitate the subsequent adhesion of the compositions thereto. Such treatments are known in the art and can be performed in a single or multistage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

As noted above, the aqueous compositions of the present invention may be directly applied to an intrinsically basic substrate and then allowed to set *in situ.* Intrinsic basicity may be observed through contacting the surface of the substrate with a water-wetted pH paper. However, it is preferred that the intrinsic basicity is determined by the pH measurement method of ASTM F710-11. The substrate should have a pH of greater than 7, for example a pH of greater than 10 or greater than 12. And exemplary substrates possessing intrinsic basicity include but are not limited to: fresh asbestos; concrete; cementitious substrates such Portland cement, aluminium cement and cementitious fiberboard; calcareous substrates comprising calcium oxide, calcium hydroxide and / or calcium carbonate; and, inorganic mortar.

The aqueous compositions are applied to the preferably pre-treated surfaces of the substrate by conventional application methods such as: using a trowel, for instance a notched trowel; brushing; roll coating; using a float; pumping; ramming; casting; gunning; and, spraying. The methods of gunning and spraying may be performed using conventional, commercially available equipment but selecting pressure conditions, nozzle type(s), conduit (hose) length and diameters such that clogging of the equipment is obviated and a controlled application pattern is achieved.

Whilst the application of the aqueous compositions by the aforementioned methods may be performed in a single or multiple step manner, it is recommended that the compositions be applied to a total wet film thickness of from 0.1 to 10 mm, for example from 0.5 to 10 mm or from 0.5 to 5 mm.

The curing of the compositions of the present disclosure can occur at temperatures in the range of from 20°C to 100°C, preferably from 30°C to 100°C, and in particular from 40°C to 80°C. The temperature that is suitable depends on the specific compounds present and the desired setting rate and can be determined in the individual case by the skilled artisan, using simple preliminary tests if necessary. Where applicable, the temperature of the mixture formed from the respective components of the aqueous cementitious composition may be raised above the mixing temperature and / or the application temperature using conventional means including microwave induction. Alternatively or additionally, the aqueous compositions may be applied to a pre-heated substrate, this pre-heating facilitating the fast setting of the composition on the substrate. In an illustrative embodiment, the compositions are applied in a series of thin layers to attain a desired total thickness, wherein the substrate is maintained at a temperature of from 30 to 100°C throughout the application of each layer.

The aqueous cementitious composition of the present invention may be applied to form new composite structures comprising a dried coating obtained from said composition and a substrate. It is also considered that the aqueous cementitious composition may be used in a restorative function, for instance to repair a structure which has become broken, displaced or abraded.

As discussed above, the present aqueous cementitious composition may have particular utility as an adhesive formulation for the application of flooring coverings to a basic substrate. More particularly, the present coating composition may be used as an adhesive formulation for the bonding of tiles to a basic substrate. Without intention to limit the present invention, said tile may be selected from the group consisting of: ceramic tile; porcelain tile; glass tile; cement tile; marble tile; granite tile; limestone tile; travertine tile; quarry tile; metallic tile; wooden tile; and, resinous tile. Tiles constituted by more than one such materials are also contemplated.

Conventionally, the composition will be disposed between the floor covering or tile and the substrate but it might find either independent or complimentary utility as a grouting material disposed between sections of the floor covering after installation.

When used as an adhesive formulation, the composition will be applied to the substrate as discussed above. Whilst the composition may be permitted to cure for a duration of time, any floor covering should be applied to the composition during the open time thereof. As will be familiar to the skilled artisan, after applying the floor covering, pressure may be applied to thereto for using, for example, a static weight or a roller which is passed backwards and forwards over the applied covering.

The following examples are illustrative of the present invention and are not intended to limit the scope of the invention in any way.

### EXAMPLES

The following commercial products are employed in the Example:

| | |
|---|---|
| Kelco Crete DG-F: | Diutan gum based biopolymer available from CP Kelco ApS. |
| EXALT 60 H: | Stabilized suspension of calcium aluminium cement, available from Kerneos, France. |
| Melment F10: | Sulfonated polycondensation product based on melamine, superplasticizer available from GlobMarble. |
| Preventol D7: | Aqueous formulation of isothiazolines, biocide available from LANXESS. |
| Avandisp^{™} 109EA: | Aqueous dispersion (56 wt.% solids) of acrylate and styrene copolymer, available from Avance Chem. |
| RAVACRYL R248: | Surfactant stabilized, styrene-acrylate copolymer, available from Synthomer. |
| BYK 037: | VOC-free emulsion of paraffinic mineral oils and hydrophobic silicon components, defoamer, available from BYK-Chemie GmbH. |
| Absorbent Tile (AB): | Ceramic tile; a glazed, porous body tile complying with EN 14411, Group B III. The tile is characterized by: water absorption of 15±3% by weight, as determined in accordance with ISO15045-3 (1995); thickness of from 7-10 mm; profile back pattern of less than 0.25 mm depth; and, facial dimensions of 50 (±1) mm x 50 (±1) mm. |
| Non-absorbent Tile (NA): | Dry-pressed ceramic tile in accordance with EN 14411, Group B la, fully vitrified. The tile is characterized by: water absorption <0.5 % by weight, as determined in accordance with ISO15045-3 (1995); being unglazed, with a plain, matt, adhering surface; and, facial dimensions of 50 (±1) mm x 50 (±1) mm. |

The Examples were subjected to the following protocols under identical testing conditions, thereby allowing each Example to be compared.

Open time: The open time characterizes the wetting of the tile disposed within the adhesive composition after a stated bedding time. This parameter is measured herein according to European Standard EN 12004-2:2017 *Adhesives for ceramic tiles: Test methods.*

Tensile Adhesion Strength: The tensile adhesion strength of the adhesive composition is measured in accordance with EN 12004-2:2017 *Adhesives for ceramic tiles: Test methods* after the application of the heat-ageing, water immersion and freeze-thaw conditions tabulated below. 1kg of the composition was applied in this test.

Slip Resistance: This parameter of the adhesive composition is measured in accordance with EN 12004-2:2017 *Adhesives for ceramic tiles: Test methods.* 100 grams of the composition was applied in this test.

Further testing methodologies are given in the Tables below where applicable.

### Example 1

A liquid formulation was prepared in accordance with the formulation shown in Table 1 herein-below.

**Table 1**

| **Raw Material** | **Wt.% of Composition** |
|---|---|
| EXALT 60 H | 17.00 |
| SILICA FLOUR 75 M | 15.01 |
| SILICA 0.0-0.3MM | 30.81 |
| RAVACRYL R248 | 7.00 |
| AVANDISP 109 EA | 20.00 |
| PREVENTOL D7 | 0.05 |
| KELCOCRETE DGF | 0.08 |
| WATER | 7.00 |
| TITANIUM DIOXIDE | 3.00 |
| BYK 037 | 0.05 |
| TOTAL | 100.00 |

The liquid cement (EXALT 60 H) was charged into a putty mixer to which was then added the co-polymers (Ravacryl R 248; Avandisp^{™} 109 EA). The obtained mixture was stirred at slow speed for approximately 5 minutes until a homogeneous blend was obtained. The natural biopolymer (Kelco Crete DG-F) was then added to the blend which was further mixed for a period of 15 to 20 minutes to obtain a uniform mixture. The silica fillers, titanium dioxide and defoamer (BYK037) were then added to the mixture under stirring and subject to process checks. Once the desired process parameters were met, the biocide (Preventol D7) was added and mixing continued for another 20 to 25 minutes to yield the final composition.

**Table 2**

| **Condition Tested** | **Methodology** | **Observed Result** |
|---|---|---|
| pH | | 6.29 |
| Density (kg/L) | ASTM D 1475 | 1.35 |
| Consistency | | Free of Lumps, Homogenous Mix |
| Application | Brush | Easy; Non-Sticky; Smooth Finish |
| Viscosity (cps) | Spindle 6, Rpm 10, 28°C | 11575 |
| Elongation (%) | ASTM D 412 | 50.5 |
| Tensile Strength (N/mm²) | ASTM D 412 | 1.84 |

### Example 2

A liquid formulation was prepared in accordance with the formulation shown in Table 1 herein-below.

**Table 4**

| **Raw Material** | **Wt.% of Composition** |
|---|---|
| EXALT 60 H | 17.00 |
| SILICAFLOUR 75 M | 28.80 |
| SILICA SAND 0-0.3 MM | 33.27 |
| MELMENT F10 | 0.01 |
| AVANDISP 109 EA | 20.50 |
| PREVENTOL D7 | 0.05 |
| KELCO CRETE DGF | 0.37 |
| TOTAL | 100.00 |

The liquid cement (EXALT 60 H) was charged into a putty mixer to which was then added the co-polymer (Avandisp^{™} 109 EA). The obtained mixture was stirred at slow speed for approximately 5 minutes until a homogeneous blend was obtained. The natural biopolymer (Kelco Crete DG-F) was then added to the blend which was further mixed for a period of 15 to 20 minutes to obtain a uniform mixture. The silica fillers were then added to the mixture under stirring and subject to process checks. Once the desired process parameters were met, the biocide (Preventol D7) was added and mixing continued for another 20 to 25 minutes to yield the final composition.

European Standard EN 12004-2: 2017 classifies ceramic tile adhesives according to their chemical composition and their mechanical properties. The classification of relevance to the present composition is C2TE, the attainment of which requires an adhesive to meet specific adhesion tensile strength, open time and slip resistance conditions. Table 4 herein below compares the measured parameters of this exemplary composition with the criteria for the C2TE classification. Any application of the composition was performed using a 6mm-notched trowel.

**Table 4**

| **Parameter Tested** | **Conditions** | **Requirement for C2TE (EN 12004-2:2017)** | **Obtained Result** |
|---|---|---|---|
| Initial Tensile Strength (N/mm²) | 28 days; normal laboratory conditions; non-absorbent tile (NA) | ≥ 1 | 1.8 |
| Open Time (N/mm²) | 30 minutes bedding, Absorbent Tile (AB) | ≥ 0.5 | 1.9 |
| Open Time (N/mm²) | 35 minutes bedding, Absorbent Tile (AB) | ≥ 0.5 | 1.5 |
| Tensile Strength (N/mm²) Water Immersion | 7 days, normal lab conditions; 21 days water bath; non-absorbent tile (NA) | ≥ 1 | 1.3 |
| Tensile Strength (N/mm²) Heat Ageing | 14 days, normal lab conditions; 14 days at | ≥ 1 | 1.6 |
| | 70°C within 24 hours; non-absorbent tile (NA) | | |
| Tensile Strength (N/mm²) Freeze-Thaw Cycles | 7 days normal lab conditions; 21 days water bath; 25 days Freeze-Thaw; non-absorbent tile (NA) | ≥ 1 | 2.1 |
| Slip Resistance (mm) | | ≤ 0.5 | 0.0 |

Based on the results given in Table 4, the composition of the present invention met the requirements for satisfaction of the C2TE classification. In having an open time greater than 35 minutes, this enables the skilled artisan to correct or adjust the position of the tile during its application. The slip resistance obtained is also advantageous as it points to the utility of the composition on both vertical and horizontal surfaces. Moreover, the tensile adhesion strengths achieved under heat-ageing and freeze-thaw cycling indicate a resistance of the present composition to thermal shocks.

In view of the foregoing description and example, it will be apparent to those skilled in the art that equivalent modifications thereof can be made without departing from the scope of the claims.

## Claims

1. A one-component aqueous composition comprising, based on the total weight of non-volatile constituents in the composition:
from 15 to 30 wt.% of a) calcium aluminate cement;
from 15 to 30 wt.% of b) at least one organic latex polymer;
from 0.01 to 2 wt.% of c) diutan gum; and,
from 30 to 60 wt.% of d) substantially inert filler.

2. The one-component aqueous composition according to claim 1 comprising, based on the total weight of non-volatile constituents in the composition:
from 15 to 25 wt.% of a) said calcium aluminate cement;
from 15 to 25 wt.% of b) said at least one organic latex polymer;
from 0.1 to 1 wt.% of c) said diutan gum;
from 30 to 60 wt.% of d) substantially inert filler; and,
from 0 to 1 wt.% of a superplasticizer.

3. The one-component aqueous composition according to claim 1 or claim 2, wherein part b) comprises or consists of at least one styrene-acrylic ester copolymer.

4. The one-component aqueous composition according to claim 3, wherein the or each styrene-acrylic ester copolymer included in the composition comprises styrene and at least one further monomer represented by Formula (I):
H₂C=CGCO₂R¹ (I)
wherein: G is hydrogen, halogen or a C₁ alkyl group; and,
R¹ is selected from: C₁-C₃₀ alkyl; C₁-C₁₈ hydroxyalkyl; C₂-C₃₀ heteroalkyl; C₃-C₃₀ cycloalkyl; C2-C8 heterocycloalkyl; C₂-C₂₀ alkenyl; C₂-C₁₂ alkynyl; C₆-C₁₈ aryl; C₁-C₉ heteroaryl; C₇-C₁₈ alkaryl; and, C₇-C₁₈ aralkyl.

5. The one-component aqueous composition according to claim 4, wherein R¹ is selected from: C₁-C₁₂ alkyl; C₁-C₆ hydroxyalkyl; C₃-C₁₂ cycloalkyl; and, C₆-C₁₈ aryl.

6. The one-component aqueous composition according to any one of claims 1 to 5 comprising from 0.2 to 0.8 wt.%, preferably from 0.3 to 0.6 wt.% of c) said diutan gum, based on the total weight of non-volatile constituents in the composition.

7. The one-component aqueous composition according to any one of claims 1 to 6, wherein d) said substantially inert filler is **characterized by** at least one of the following conditions:
i) a Moh hardness of greater than 1;
ii) a particle size of 30 mesh and smaller as determined in accordance with *ISO 3310-1:20;* and,
iii) a BET surface area of from 1 to 30 m²/g, preferably from 1 to 20 m²/g.

8. The one-component aqueous composition according to any one of claims 1 to 7, wherein part d) of the composition is **characterized by** comprising or consisting of first and second particulate silica materials, which first and second materials are distinguished by their particle size.

9. The one-component aqueous composition according to claim 8 comprising, based on the total weight of non-volatile constituents in the composition:
from 10 to 20 wt.% of di) a first silica having a particle size of 75 mesh of smaller; and,
from 20 to 40 wt.% of dii) a second silica having a particle size of from 30 to 70 mesh,
wherein said particle sizes are determined in accordance with *ISO 3310-1:2016.*

10. The one-component aqueous composition according to any one of claims 1 to 9 comprising superplasticizer in an amount up to 1 wt.%, based on the total weight of non-volatile constituents in the composition, wherein said superplasticizer is selected from the group consisting of: polycarboxylates; melamine sulfonates; and, polynaphthalene sulfonates.

11. The one-component aqueous composition according to any one of claims 1 to 10 comprising from 0.1 to 5 wt.%, based on the total weight of non-volatile constituents in the composition, of at least one setting inhibitor.

12. The one-component aqueous composition according to any one of claims 1 to 11, wherein said composition is substantially free of hardener.

13. Use of the composition as defined in any one of claims 1 to 12 as a structural adhesive, wherein at least one substrate to be adhered is basic, said basicity being determined by ASTM F710-11.

14. Use of the composition as defined in any one of claims 1 to 12 as a water-proofing slurry or a slurry-type sealant for a basic substrate, said basicity being determined by ASTM F710-11.

15. The use of the composition according to claim 13 or claim 14, wherein said basic substrate is selected from the group consisting of: fresh asbestos; concrete; cementitious substrates; calcareous substrates; and, inorganic mortar.

16. Use of the composition as defined in any one of claims 1 to 12 as a tile adhesive.
